# EUROPÄISCHE PATENTSCHRIFT

(11) **EP 1 090 542 B1**
(45) Veröffentlichungstag und Bekanntmachung des Hinweises auf die Patenterteilung: **23.08.2006**
(21) Anmeldenummer: 00120880.0
(22) Anmeldetag: 26.09.2000
(51) Int. Cl.: A01C 17/00

(54) **Schleuderstreuer**
Centrifugal spreader
Epandeur centrifuge

(30) Priorität: 09.10.1999 DE 19948773
(43) Veröffentlichungstag der Anmeldung: 11.04.2001
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Lührmann, Johannes, 49134 Wallenhorst (DE)

(56) Entgegenhaltungen:
- EP-A- 0 655 187
- EP-A- 0 880 877
- EP-A- 0 903 069
- EP-A- 0 910 939

## Beschreibung

Die Erfindung betrifft ein Verfahren zum Einsatz eines Schleuderstreuer gemäß des Oberbegriffes des Patentanspruches 1.

Durch die EP 09 03 069 A1 ist ein Verfahren zum Einsatz eines Schleuderdüngerstreuers bekannt, bei dem Arbeitsbreiten von 48m und mehr erzielt werden können. Jede Schleuderscheibe weist eine kürzere und ein längere Wurfschaufeln auf. Die Schleuderscheiben werden mit einer Drehzahl von 600 bis 800 Umdrehungen pro Minute angetrieben. Die Abwurflcante der Längeren Wurfschaufeln beschreibt einen Umlaufkreis mit einem Radius von 450 bis 600 mm und die Abwurfkante der kürzeren Wurfschaufel einen Umlaufkreis mit einem Radium von 350 bis 500 mm.

Ein weiteres Verfahren ist beispielsweise in der EP-06 55 187 A1 beschrieben. Die Wurfschaufeln bestehen aus zwei zueinander teleskopierbaren Teilen, die in unterschiedlichen Positionen zueinander einstellbar sind.

Der Erfindung liegt die Aufgabe zugrunde, ein Verfahren zum Einsatz eines Schleuderstreuers mitTeleskopschaufeln vorzuschlagen, deren Teile in unterschiedlichen Positionen für verschiedene Arbeitsbreitenbereiche über einen gesamten Streuarbeitsbreitenbereich von insgesamt 20 bis 48 m zueinander einstellbar sind.

Diese Aufgabe wird erfindungsgemäß durch die kennzeichnenden Merkmale des Patentanspruches 1 gelöst. Infolge dieser Maßnahmen werden die Wurfschaufeln jeweils in die optimale Länge zueinander für die verschiedenen Streuarbeitsbreitenbereiche eingestellt, so daß mittels dieser teleskopartigen Wurfschaufeln ein Gesamtarbeitsbreitenbereich von 20 bis 48 m abgedeckt wird bzw. abdeckbar ist.

Um insbesondere bei 48 m eine gleichmäßige Streugutverteilung zu erreichen, ist vorgesehen, daß in der Rückwand des äußeren Teiles der kürzeren Wurfschaufel eine Durchtrittsöffnung angeordnet ist, welche nur bei der ausgezogenen Position des äußeren Teils der Wurfschaufel für den Streuarbeitsbreitenbereich von 48 m wirksam ist, und in den Positionen des äußeren Teils der Wurfschaufeln für die übrigen Streuarbeitsbreitenbereiche von 20-42 m durch die Rückwand des inneren Teils der Wurfschaufel abgedeckt ist.

Um die unterschiedlichen Streueigenschaften der auszubringenden Düngemittel berücksichtigen zu können, damit ein gleichmäßiges Streubild erreichbar ist, ist vorgesehen, daß die Wurfschaufeln winkelverschwenkbar angeordnet und in verschiedenen Winkelstellungen auf den Schleuderscheiben festzusetzen sind. Hierdurch lassen sich jeweils die Wurfschaufeln für die jeweiligen Streubedingungen optimal einstellen.

In einer anderen Ausführungsform ist vorgesehen, das Mittel zur Verstellung der Aufgabefläche des Materials auf die Schleuderscheiben vorhanden sind. Hierdurch kann ebenfalls der Düngerstreuer entsprechend den Streueigenschaften des Materials optimal zur Erreichung einer gleichmäßigen Streugutverteilung eingestellt werden. Darüberhinaus kann der Streuer durch die Verstellung der Aufgabefläche der Schleuderstreuer auf die genaue Arbeitsbreite innerhalb des Streuarbeitsbreitenbereiches, der durch die Länge der Wurfschaufel vorgegeben ist, eingestellt werden.

Desweiteren ist vorgesehen, daß die Mittel mittels vorzugsweise rechnergesteuerter Einstellmittel einstell- und verstellbar sind. Hierdurch läßt sich über den Rechner die Aufgabefläche des Materials auf die Schleuderscheibe in sehr einfacher Weise einstellen.

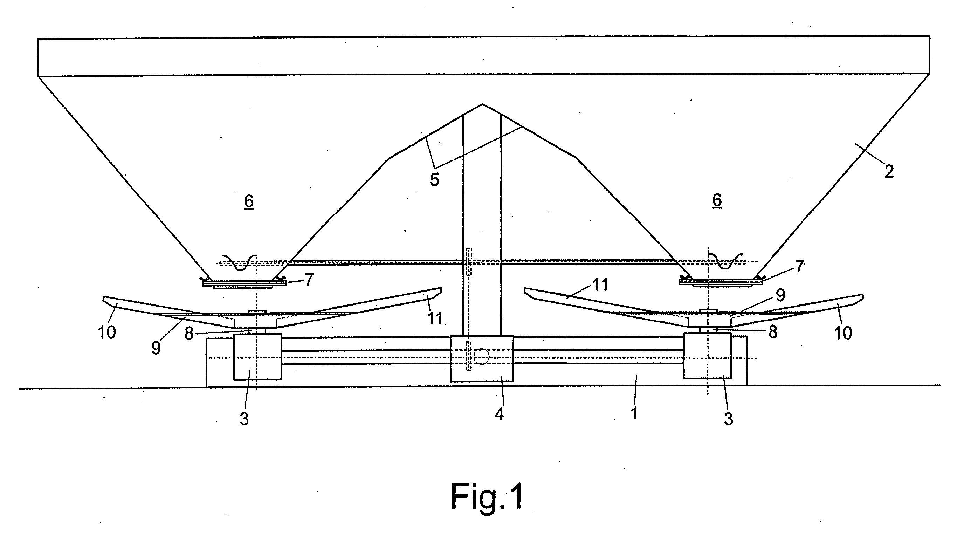

Weitere Einzelheiten der Erfindung sind den übrigen Unteransprüchen, der Beispielsbeschreibung und den Zeichnungen zu entnehmen. Hierbei zeigen
- Fig.1: einen Schleuderdüngerstreuer in Ansicht von hinten und in Prinzipdarstellung,
- Fig.2: die in Fahrtrichtung gesehen linke Schleuderscheibe mit Wurfschaufeln in der Draufsicht, wobei die Wurfschaufeln für eine Arbeitsbreite von 20-28 m eingestellt sind,
- Fig.3: die in Fahrtrichtung gesehen linke Schleuderscheibe mit Wurfschaufeln in der Draufsicht, wobei die Wurfschaufeln für eine Arbeitsbreite von 36 m eingestellt sind,
- Fig.4: die in Fahrtrichtung gesehen linke Schleuderscheibe mit Wurfschaufeln in der Draufsicht, wobei die Wurfschaufeln für eine Arbeitsbreite von 42 m eingestellt sind und
- Fig.5: die in Fahrtrichtung gesehen linke Schleuderscheibe mit Wurfschaufeln in der Draufsicht, wobei die Wurfschaufeln für eine Arbeitsbreite von 48 m eingestellt sind.

Der Schleuderdüngerstreuer ist mit dem Rahmen 1 ausgestattet, an dem der Vorratsbehälter 2 und ein Winkeltrieb mit den Winkelgetrieben 3 und dem Mittelgetriebe 4 angebracht sind. Hierbei ist der untere Bereich des Vorratsbehälters 2 durch ein dachförmiges Mittelteil 5 in zwei Auslauftrichter 6 unterteilt, in deren Bodenplatten 7 sich nicht näher dargestellte Auslauföffnungen befinden. Diese Auslauföffnungen sind mit Hilfe von schieberförmigen Dosierelementen verschließbar und in unterschiedlichen Öffnungsweiten mittels Einstellmittel einstellbar.

Unterhalb der Auslauföffnungen sind quer zur Fahrtrichtung auf den Ausgangswellen 8 der Winkelgetriebe 3 die beiden Schleuderscheiben 9 nebeneinander beabstandet zueinander angeordnet. Auf diesen Schleuderscheiben 9 sind jeweils die kürzere Wurfschaufel 10 und die längere Wurfschaufel 11 befestigt. Die Befestigung der Schleuderscheiben 9 auf den Ausgangswellen 8 des Winkelgetriebes 3 ist derart ausgebildet, daß sich die Schleuderscheiben 9 vorzugsweise werkzeuglos auf diesen Ausgangswellen 8 montieren lassen bzw. von den Ausgangswellen demontieren lassen. Den einzelnen Schleuderscheiben 9 wird das sich im Vorratsbehälter 2 des Schleuderdüngerstreuers befindliche Düngemittel in genau einstellbaren Mengen zugeführt. Die rotierenden Schleuderscheiben 9 verteilen mit den Wurfschaufeln 10 und 11 den auf die jeweilige Schleuderscheibe 9 auftreffenden Düngemittelstrom gleichmäßig über die genau einstellbare Arbeitsbreite des Düngerstreuers. Die Schleuderscheiben 9 rotieren entgegengesetzt zueinander.

Die Wurfschaufel 10 besteht aus dem inneren Teil 12 und dem äußeren Teil 13, während die Wurfschaufel 11 aus dem inneren Teil 14 und dem äußeren Teil 15 besteht. Die inneren und äußeren Teile der Wurfschaufeln 10 und 11 können in unterschiedlichen Längen zueinander eingestellt werden, um so den Schleuderdüngerstreuer auf verschiedene Arbeitsbreiten einstellen zu können.

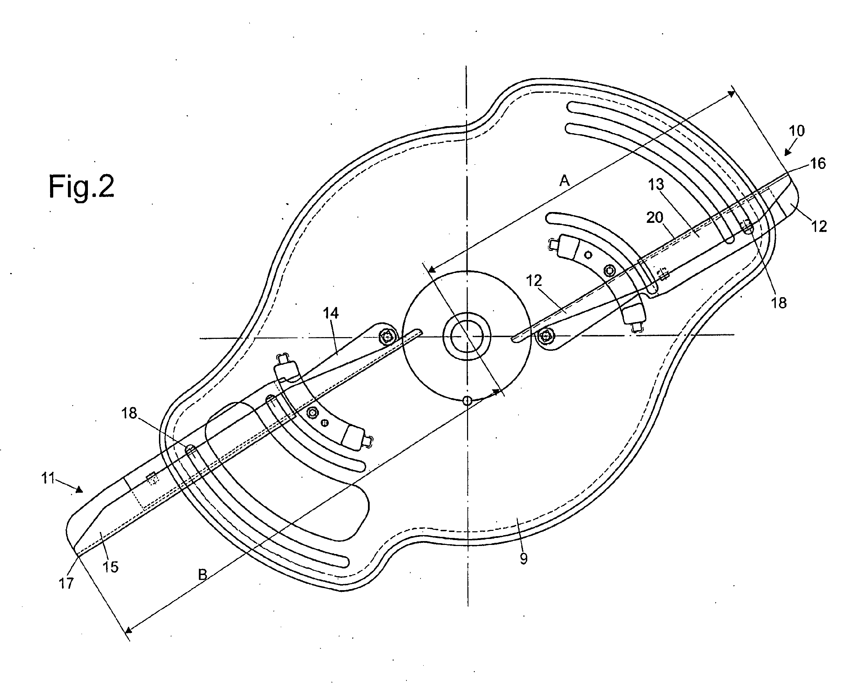

In der Fig.2 ist die linke Schleuderscheibe 9 dargestellt. Die nicht dargestellte rechte Schleuderscheibe ist spiegelbildlich zu der dargestellten linken Schleuderscheibe 9 ausgebildet. Die kürzere Wurfschaufel 10 aus dem inneren 12 und äußeren Teil 13 sowie die längere Wurfschaufel 11 aus dem inneren 14 und äußeren Teil 15 ist für eine Arbeitsbreite von 20 - 28 m in der Länge eingestellt. Die Abstreukante 16 der kürzeren Wurfschaufel 10 beschreibt hierbei einen Umlaufkreis mit einem Durchmesser A von 630 - 710 mm, vorzugsweise etwa 670 mm und die Schleuderscheibe 9 wird mit einer Drehzahl von 650 - 800 U/min, vorzugsweise 720 U/min angetrieben. Hierbei beschreibt die Abstreukante 16 der kürzeren Wurfschaufel 10 eine Umfangsgeschwindigkeit von 23,7 - 26,75 m/sec, vorzugsweise etwa 25,25 m/sec.

Der innere 14 und äußere Teil 15 der längeren Wurfschaufel 11 sind für den Streuarbeitsbreitenbereich von 20 - 28 m bei einer Drehzahl von 650 - 800 U/min, vorzugsweise etwa 720 U/min so eingestellt, daß die Abstreukante 17 der längeren Wurfschaufel 11 einen Umlaufkreis B mit einem Durchmesser von 830 - 910 mm, vorzugsweise etwa 870 mm beschreibt. Hierbei läuft dann die Abstreukante der längeren Wurfschaufel mit einer Umfangsgeschwindigkeit von 31,27 - 34,29 m/sec, vorzugsweise etwa 32,78 m/sec um. Die Wurfschaufeln 10 und 11 sind mittels der Schrauben 18 in der entsprechenden Länge zueinander zu arretieren und winkelverschwenkbar in verschiedenen Winkellagen auf den Schleuderscheiben 9 festsetzbar angeordnet, so daß eine Anpassung innerhalb des Arbeitsbreitenbereiches auf die jeweiligen Streu- und Wurfeigenschaften der abgeschleuderten Düngerpartikel einstellbar ist.

In der Rückwand 19 des äußeren Teils 12 der kürzeren Wurfschaufel 10 ist die Durchtrittsöffnung 20 angeordnet, welche in der eingeschobenen Position des äußeren Teils 12 für den Streuarbeitsbreitenbereich von 20 - 28 m durch den äußeren Teil 12 der Wurfschaufel 10 abgedeckt ist.

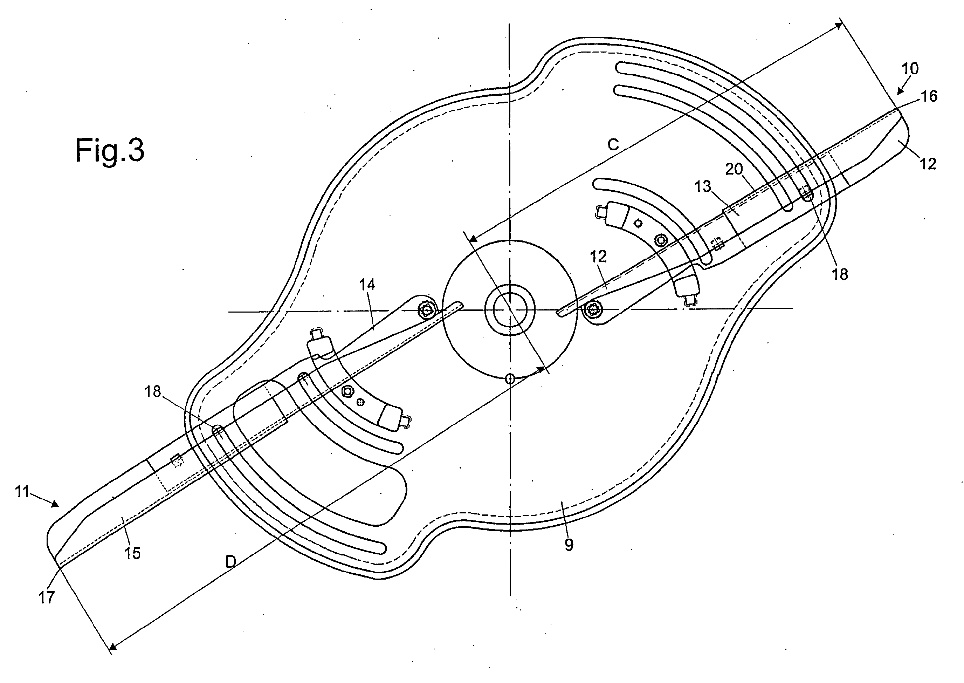

In der Fig.3 ist die linke Schleuderscheibe 9 dargestellt. Die nicht dargestellte rechte Schleuderscheibe ist spiegelbildlich zu der dargestellten linken Schleuderscheibe 9 ausgebildet. Die kürzere Wurfschaufel 10 aus dem inneren 12 und äußeren Teil 13 sowie die längere Wurfschaufel 11 aus dem inneren 14 und äußeren Teil 15 ist für eine Arbeitsbreite von etwa 36 m in der Länge eingestellt. Die Abstreukante 16 der kürzeren Wurfschaufel 10 beschreibt hierbei einen Umlaufkreis mit einem Durchmesser C von 710 - 790 mm, vorzugsweise etwa 750 mm und die Schleuderscheibe 9 wird mit einer Drehzahl von 650 - 800 U/min, vorzugsweise 720 U/min angetrieben. Hierbei beschreibt die Abstreukante 16 der kürzeren Wurfschaufel 10 eine Umfangsgeschwindigkeit von 26,75 - 29,75 m/sec, vorzugsweise etwa 28,25 m/sec Der innere 14 und äußere Teil 15 der längeren Wurfschaufel 11 sind für den Streuarbeitsbreitenbereich von etwa 36 m bei einer Drehzahl von 650 - 800 U/min, vorzugsweise etwa 720 U/min so eingestellt, daß die Abstreukante 17 der längeren Wurfschaufel 11 einen Umlaufkreis D mit einem Durchmesser von 930 - 1010 mm, vorzugsweise etwa 970 mm beschreibt. Hierbei läuft dann die Abstreukante der längeren Wurfschaufel mit einer Umfangsgeschwindigkeit von 35,0 - 38,10 m/sec, vorzugsweise etwa 36,55 m/sec um. Die Wurfschaufeln 10 und 11 sind mittels der Schrauben 18 in der entsprechenden Länge zueinander zu arretieren und winkelverschwenkbar in verschiedenen Winkellagen auf den Schleuderscheiben 9 festsetzbar angeordnet, so daß eine Anpassung innerhalb des Arbeitsbreitenbereiches auf die jeweiligen Streu- und Wurfeigenschaften der abgeschleuderten Düngerpartikel einstellbar ist.

In der Rückwand 19 des äußeren Teils 12 der kürzeren Wurfschaufel 10 ist die Durchtrittsöffnung 20 angeordnet, welche in der eingeschobenen Position des äußeren Teils 12 für den Streuarbeitsbreitenbereich von etwa 36 m durch den äußeren Teil 12 der Wurfschaufel 10 abgedeckt ist.

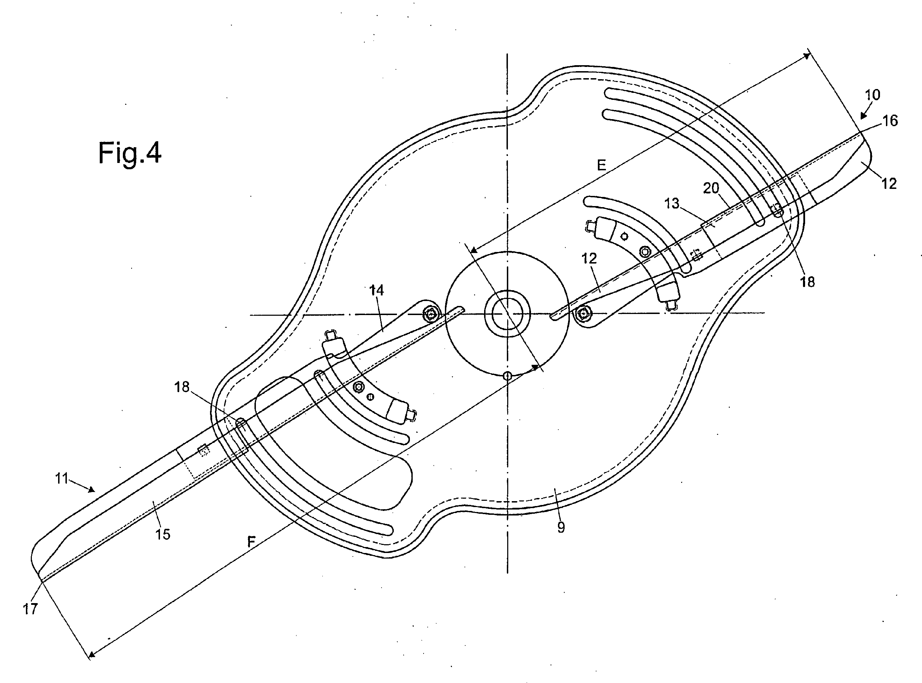

In der Fig.4 ist die linke Schleuderscheibe 9 dargestellt. Die nicht dargestellte rechte Schleuderscheibe ist spiegelbildlich zu der dargestellten linken Schleuderscheibe 9 ausgebildet. Die kürzere Wurfschaufel 10 aus dem inneren 12 und äußeren Teil 13 sowie die längere Wurfschaufel 11 aus dem inneren 14 und äußeren Teil 15 ist für eine Arbeitsbreite von 42 m in der Länge eingestellt. Die Abstreukante 16 der kürzeren Wurfschaufel 10 beschreibt hierbei einen Umlaufkreis mit einem Durchmesser E von 710 - 790 mm, vorzugsweise etwa 750 mm und die Schleuderscheibe 9 wird mit einer Drehzahl von 650 - 800 U/min, vorzugsweise 720 U/min angetrieben. Hierbei beschreibt die Abstreukante 16 der kürzeren Wurfschaufel 10 eine Umfangsgeschwindigkeit von 26,75 - 29,75 m/sec, vorzugsweise etwa 28,25 m/sec.

Der innere 14 und äußere Teil 15 der längeren Wurfschaufel 11 sind für den Streuarbeitsbreitenbereich von 42 m bei einer Drehzahl von 650 - 800 U/min, vorzugsweise etwa 720 U/min so eingestellt, daß die Abstreukante 17 der längeren Wurfschaufel 11 einen Umlaufkreis F mit einem Durchmesser von 1030 - 1120 mm, vorzugsweise etwa 1090 mm beschreibt. Hierbei läuft dann die Abstreukante der längeren Wurfschaufel mit einer Umfangsgeschwindigkeit von 39,50 - 42,60 m/sec, vorzugsweise etwa 41,07 m/sec um. Die Wurfschaufeln 10 und 11 sind mittels der Schrauben 18 in der entsprechenden Länge zueinander zu arretieren und winkelverschwenkbar in verschiedenen Winkellagen auf den Schleuderscheiben 9 festsetzbar angeordnet, so daß eine Anpassung innerhalb des Arbeitsbreitenbereiches auf die jeweiligen Streu- und Wurfeigenschaften der abgeschleuderten Düngerpartikel einstellbar ist.

In der Rückwand 19 des äußeren Teils 12 der kürzeren Wurfschaufel 10 ist die Durchtrittsöffnung 20 angeordnet, welche in der eingeschobenen Position des äußeren Teils 12 für den Streuarbeitsbreitenbereich von 42 m durch den äußeren Teil 12 der Wurfschaufel 10 abgedeckt ist.

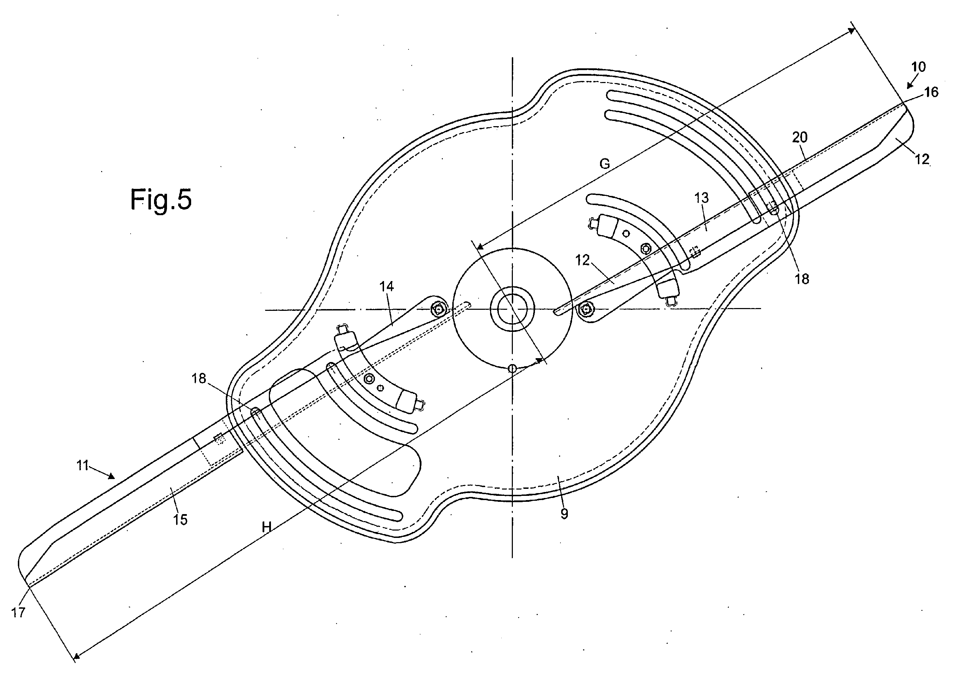

In der Fig.5 ist die linke Schleuderscheibe 9 dargestellt. Die nicht dargestellte rechte Schleuderscheibe ist spiegelbildlich zu der dargestellten linken Schleuderscheibe 9 ausgebildet. Die kürzere Wurfschaufel 10 aus dem inneren 12 und äußeren Teil 13 sowie die längere Wurfschaufel 11 aus dem inneren 14 und äußeren Teil 15 ist für eine Arbeitsbreite von 48 m in der Länge eingestellt. Die Abstreukante 16 der kürzeren Wurfschaufel 10 beschreibt hierbei einen Umlaufkreis mit einem Durchmesser G von 810 - 890 mm, vorzugsweise etwa 850 mm und die Schleuderscheibe 9 wird mit einer Drehzahl von 650 - 800 U/min, vorzugsweise 720 U/min angetrieben. Hierbei beschreibt die Abstreukante 16 der kürzeren Wurfschaufel 10 eine Umfangsgeschwindigkeit von 30,50 - 33,54 m/sec, vorzugsweise etwa 32,0 m/sec.

Der innere 14 und äußere Teil 15 der längeren Wurfschaufel 11 sind für den Streuarbeitsbreitenbereich von 48 m bei einer Drehzahl von 650 - 800 U/min, vorzugsweise etwa 720 U/min so eingestellt, daß die Abstreukante 17 der längeren Wurfschaufel 11 einen Umlaufkreis H mit einem Durchmesser von 1130 - 1210 mm, vorzugsweise etwa 1170 mm beschreibt. Hierbei läuft dann die Abstreukante der längeren Wurfschaufel mit einer Umfangsgeschwindigkeit von 42,60 - 45,6 m/sec, vorzugsweise etwa 44,10 m/sec um. Die Wurfschaufeln 10 und 11 sind mittels der Schrauben 18 in der entsprechenden Länge zueinander zu arretieren und winkelverschwenkbar in verschiedenen Winkellagen auf den Schleuderscheiben 9 festsetzbar angeordnet, so daß eine Anpassung innerhalb des Arbeitsbreitenbereiches auf die jeweiligen Streu- und Wurfeigenschaften der abgeschleuderten Düngerpartikel einstellbar ist.

In der Rückwand 19 des äußeren Teils 12 der kürzeren Wurfschaufel 10 ist die Durchtrittsöffnung 20 angeordnet, welche in der ausgezogenen Position des äußeren Teils 12 der Wurfschaufel für den Streuarbeitsbreitenbereich von 48 m offen ist.

## Patentansprüche

1. Verfahren zum Einsatz eines Schleuderstreuers zum Verteilen von Düngemitteln und dergleichen auf landwirtschaftlichen Flächen mit einem Vorratsbehälter und zumindest zwei unterhalb des Vorratsbehälters angeordneten rotierend angetriebenen Schleuderscheiben, auf denen zumindest zwei aus zwei Teilen (12,13,14,15) bestehende, unterschiedlich lange Wurfschaufeln (10,11) angeordnet sind, wobei jeweils zumindest das äußere Teil (13,15) der Wurfschaufeln (10,11) in unterschiedlichen Stellungen zur Erreichung unterschiedlicher Längen der Wurfschaufeln (10,11) versetzbar und gegenüber dem inneren Teil (12,14) der jeweiligen Wurfschaufel (10,11) längenverstellbar und in unterschiedlichen Positionen zur Einstellung mehrerer Streuarbeitsbreitenbereiche arretierbar ist und wobei die jeweilige aus einem inneren und einem äußeren Teil (12,13,14,15) bestehenden Wurfschaufeln (10,11) als teleskopartig ausziehbare und einschiebbare Wurfschaufeln (10,11) ausgebildet sind, **dadurch gekennzeichnet, daß** die Schleuderscheiben (9) mit einer Drehzahl von 650 - 800 U/min, vorzugsweise 720 U/min angetrieben sind,
- dass die Teile (12,13) der kürzeren Wurfschaufeln (10) in derartige Längen aus- und einschiebbar ist, dass ihre äußere Abstreukante (16) einen Umlaufkreis mit einem Durchmesser zwischen 630 und 890 mm beschreibt, und dass die Teile (14,15) der längeren Wurfschaufel (11) in derartige Längen aus- und einschiebbar ist, dass ihre äußere Abstreukante (17) einen Umlaufkreis mit einem Durchmesser zwischen 830 und 1210 mm beschreibt, wobei die Wurfschaufeln (10,11) für die verschiedenen Streuarbeitsbreitenbereiche derart eingestellt werden,
- dass für einen Streuarbeitsbreitenbereich von 20-28 m die Teile (12,13,14,15) der Wurfschaufeln (10, 11) jeweils in eine Position zueinander eingestellten sind, in welcher die Abstreukante (16) der kürzeren Wurfschaufel (10) einen Umlaufkreis mit einem Durchmesser von 630 -710 mm, vorzugsweise etwa 670 mm und die Abstreukante (17) der längeren Wurfschaufel (11) einen Umlaufkreis mit einem Durchmesser von 830-910 mm, vorzugsweise etwa 870 mm beschreiben,
- dass für einen Streuarbeitsbreitenbereich von etwa 36 m die Teile (12,13,14,15) der Wurfschaufeln (10, 11) jeweils in eine Position zueinander eingestellt sind, in welcher die Abstreukante (16) der kürzeren Wurfschaufel (10) einen Umlaufkreis mit einem Durchmesser von 710 -790 mm, vorzugsweise etwa 750 mm und die Abstreukante (17) der längeren Wurfschaufel (11) einen Umlaufkreis mit einem Durchmesser von 930-1010 mm, vorzugsweise etwa 970 mm beschreiben,
- dass für einen Streuarbeitsbreitenbereich von 42 m die Teile (12,13,14,15) der Wurfschaufeln (10, 11) jeweils in eine Position zueinander eingestellt sind, in welcher die Abstreukante (16) der kürzeren Wurfschaufel (10) einen Umlaufkreis mit einem Durchmesser von 710-790 mm, vorzugsweise etwa 750 mm und die Abstreukante (17) der längeren Wurfschaufel (11) einen Umlaufkreis mit einem Durchmesser von 1030-1120 mm, vorzugsweise etwa 1090 mm beschreiben,
- dass für einen Streuarbeitsbreitenbereich von 48 m die Teile (12,13,14,15) der Wurfschaufeln (10, 11) jeweils in eine Position zueinander eingestellt sind, in welcher die Abstreukante (16) der kürzeren Wurfschaufel (10) einen Umlaufkreis mit einem Durchmesser von 810 -890 mm, vorzugsweise etwa 850 mm und die Abstreukante (17) der längeren Wurfschaufel (11) einen Umlaufkreis mit einem Durchmesser von 1130-1210 mm, vorzugsweise etwa 1170 mm beschreiben.

2. Verfahren nach Anspruch 1, **dadurch gekennzeichnet, daß** in der Rückwand des äußeren Teiles (13) der kürzeren Wurfschaufel (10) eine Durchtrittsöffnung (20) angeordnet ist, welche nur bei der ausgezogenen Position des äußeren Teils (13) der Wurfschaufel (10) für den Streuarbeitsbreitenbereich von 48 m wirksam ist, und in den Positionen des äußeren Teils (13) der Wurfschaufel (10) für die übrigen Streuarbeitsbreitenbereiche von 20-42 m durch die Rückwand des inneren Teils (12) der Wurfschaufel (10) abgedeckt ist.

3. Verfahren nach einem oder mehreren der vorstehenden Ansprüche, **dadurch gekennzeichnet, daß** die Wurfschaufeln (10, 11) winkelverschwenkbar und in verschiedenen Winkeleinstellungen festsetzbar auf den Schleuderscheiben (9) angeordnet sind.

4. Verfahren nach einem oder mehreren der vorstehenden Ansprüche, **dadurch gekennzeichnet, daß** Mittel zur Verstellung der Aufgabefläche des Materials auf die Schleuderscheiben (9) vorhanden sind.

5. Verfahren nach Anspruch 4, **dadurch gekennzeichnet, daß** die Mittel mittels vorzugsweise rechnergesteuerter Einstellmittel ein- und/oder verstellbar sind.

## Claims

1. Method for the use of a centrifugal broadcaster for distributing fertiliser materials and the like on agricultural surfaces, the said centrifugal broadcaster having a hopper and at least two rotatingly driven centrifugal discs disposed below the hopper, on which centrifugal discs are disposed at least two throwing vanes (10, 11), which comprise two parts (12, 13, 14, 15) and are of different lengths, wherein respectively at least the outer part (13, 15) of the throwing vanes (10, 11) is displaceable into different positions to achieve different lengths of the throwing vanes (10, 11) and is longitudinally adjustable restive to the inner part (12,14) of the respective throwing vane (10, 11) and is lockable in different positions for adjusting a plurality of scattering width ranges, and wherein the respective throwing vane (10, 11), which comprises an inner part and an outer part (12, 13, 14, 15), is in the form of a throwing vane (10, 11) that can be telescopically extended and retracted, **characterised in that** the centrifugal discs (9) are driven at a speed of between 650 and 800 rpm, preferably 720 rpm.
- **in that** the parts (12, 13) of the shorter throwing vane (10) are extendable and retractable in such lengths that their outer spreading edge (16) describes a circuit with a diameter between 630 and 890 mm, and **in that** the parts (14, 15) of the longer throwing vane (11) are extendable and retractable in such lengths that their outer spreading edge (17) describes a circuit with a diameter between 830 and 1210 mm, wherein the throwing vanes (10, 11) are adjusted for the various scattering width ranges in such a manner that,
- for a scattering width range of 20-28 m, the parts (12, 13, 14, 15) of the throwing vanes (10, 11) are adjusted respectively into a position one relative to the other in which the spreading edge (16) of the shorter throwing vane (10) describes a circuit with a diameter of 630-710 mm, preferably approximately 670 mm and the spreading edge (17) of the longer throwing vane (11) describes a circuit with a diameter of 830-910 mm, preferably approximately 870 mm,
- **in that** for a scattering width range of approximately 36m, the parts (12, 13, 14, 15) of the throwing vanes (10, 11) are adjusted respectively into a position one relative to the other in which the spreading edge (16) of the shorter throwing vane (10) describes a circuit with a diameter of 710-790 mm, preferably approximately 750mm and the spreading edge (17) of the longer throwing vane (11) describes a circuit with a diameter of 930-1010 mm, preferably approximately 970 mm,
- **in that** for a scattering width range of 42 m, the parts (12, 13, 14, 15) of the throwing vanes (10, 11) are adjusted respectively into a position one relative to the other in which the spreading edge (16) of the shorter throwing vane (10) describes a circuit with a diameter of 710-790 mm, preferably approximately 750mm and the spreading edge (17) of the longer throwing vane (11) describes a circuit with a diameter of 1030-1120 mm, preferably approximately 1090 mm,
- **in that** for a scattering width range of 48 m, the parts (12, 13, 14, 15) of the throwing vanes (10, 11) are adjusted respectively into a position one relative to the other in which the spreading edge (16) of the shorter throwing vane (10) describes a circuit with a diameter of 810-890 mm, preferably approximately 850mm and the spreading edge (17) of the longer throwing vane (11) describes a circuit with a diameter of 1130-1210 mm, preferably approximately 1170 mm.

2. Method according to claim 1, **characterised in that** in the rear wall of the outer part (13) of the shorter throwing vane (10) there is an opening (20), which is effective only for the extended position of the outer part (13) of the throwing vane (10) for the scattering width range of 48 m, the said opening (10) being covered by the rear wall of the inner part (12) of the throwing vane (10) in the positions of the outer part (13) of the throwing vane (10) for the remaining scattering width ranges of 20-42 m.

3. Method according to one or more of the preceding claims, **characterised in that** the throwing vanes (10, 11) are angularly pivotable and are disposed so as to be securable in different angular positions on the centrifugal discs (9).

4. Method according to one or more of the preceding claims, **characterised in that** there are means provided for adjusting the surface for delivering the material onto the centrifugal discs (9).

5. Method according to claim 4, **characterised in that** the means are settable and/or adjustable through the intermediary preferably of computer-controlled adjustment means.

## Revendications

1. Procédé de mise en oeuvre d'un épandeur centrifuge pour distribuer des engrais ou produits analogues sur des surfaces agricoles, comprenant un réservoir et au moins deux disques d'épandage centrifuges entraînés en rotation sous le réservoir, ces disques comportant au moins deux palettes d'éjection (10, 11) de longueurs différentes, formées de deux parties (12, 13, 14, 15), dont au moins la partie extérieure (13, 15) des palettes d'éjection (10, 11) peut être mise dans des positions différentes pour réaliser des longueurs différentes des palettes d'éjection (10, 11) en étant réglables par rapport à la partie intérieure (12, 14) de chaque palette d'éjection (10, 11), et pouvant être bloquées dans des positions différentes pour régler plusieurs plages de largeurs d'épandage,
les palettes d'éjection (10, 11) formées chacune d'une partie intérieure et d'une partie extérieure (12, 13, 14, 15) étant réalisées sous la forme de palettes d'éjection (10, 11) extensibles et rétractables télescopiquement,
**caractérisé en ce que**
- les disques d'épandage (9) sont entraînés à une vitesse de rotation de 650-800 t/min et de préférence 720 t/min,
- les parties (12, 13) des palettes d'éjection courtes (10) peuvent être déployées et rétractées en longueur pour que leur arête d'éjection (16), extérieure, décrive un cercle d'un diamètre compris entre 630 et 890 mm, et
les parties (14, 15) des palettes d'éjection longues (11) peuvent être déployées ou rétractées suivant une longueur pour que leur arête d'éjection (17) extérieure décrive un cercle d'un diamètre compris entre 830 et 1210 mm, les palettes d'éjection (10, 11) pouvant être réglées pour les différentes plages de largeurs d'épandage,
- pour une plage de largeur d'épandage de 20-28 m, les parties (12, 13, 14, 15) des palettes d'éjection (10, 11) peuvent être réglées chaque fois dans une position respective dans laquelle l'arête d'éjection (16) des palettes d'éjection courtes (10) décrit un cercle d'un diamètre compris entre 630-710 mm, de préférence de l'ordre de 670 mm et l'arête d'éjection (17) des palettes d'éjection longues (11) décrit un cercle d'un diamètre de 830-910 mm, de préférence de l'ordre de 870 mm,
- pour une plage de largeur d'épandage de l'ordre de 36 m, les parties (12, 13, 14, 15) des palettes d'éjection (10, 11) peuvent réglées respectivement dans une position dans laquelle l'arête d'éjection (16) des palettes d'éjection courtes (10) décrit un cercle d'un diamètre de 710-790 mm, de préférence de l'ordre de 750 mm et l'arête d'éjection (17) des palettes d'éjection longues décrit un cercle d'un diamètre de 930-1010 mm et de préférence de l'ordre de 970 mm,
- pour une plage de largeur d'épandage de 42 m, les parties (12, 13, 14, 15) des palettes d'éjection (10, 11) peuvent être réglées respectivement dans une position dans laquelle l'arête d'éjection (16) des palettes d'éjection courtes (10) décrit un cercle d'un diamètre de 710-790 mm, de préférence de l'ordre 750 mm et l'arête d'éjection (17) des palettes d'éjection (11) décrit un cercle d'un diamètre de 1030-1120 mm et de préférence de l'ordre de 1090 mm,
- pour une plage de largeur d'épandage de 48 m, les parties (12, 13, 14, 15) des palettes d'éjection (10, 11) sont réglées respectivement dans une position dans laquelle l'arête d'éjection (16) des palettes d'éjection courtes (10) décrit un cercle d'un diamètre de 810-890 mm, de préférence de l'ordre de 850 mm et l'arête d'éjection (17) des palettes d'éjection (11) décrit un cercle d'un diamètre de 1130-1210 mm, de préférence d'environ 1170 mm.

2. Procédé selon la revendication 1,
**caractérisé en ce que**
la paroi arrière de la partie extérieure (12) de la palette d'éjection courte (10) comporte un orifice de passage (20) qui n'est actif que pour la position déployée de la partie extérieure (13) de la palette d'éjection (10) pour une plage de largeur d'épandage de 48 m, alors que dans les positions de la partie extérieure (13) de la palette d'éjection (10) pour les autres plages de largeurs d'épandage de 20-42 m, l'orifice de passage est couvert par la paroi arrière de la partie intérieure (12) de la palette d'éjection (10).

3. Procédé selon l'une ou plusieurs des revendications précédentes,
**caractérisé en ce que**
les palettes d'éjection (10, 11) peuvent être pivotées angulairement et être bloquées dans différentes positions de réglage sur les disques d'épandage (9).

4. Procédé selon l'une ou plusieurs des revendications précédentes,
**caractérisé par**
des moyens pour régler la surface de distribution de la matière sur les disques d'épandage (9).

5. Procédé selon la revendication 4,
**caractérisé en ce que**
les moyens sont réglables et/ou déplaçables, de préférence à l'aide de moyens de réglage commandés par calculateur.
